# EUROPEAN PATENT APPLICATION

(11) **EP 4 756 079 A1**
(43) Date of publication of application: **10.06.2026**
(21) Application number: 24217910.9
(22) Date of filing: 05.12.2024
(51) Int. Cl.: C25B 1/23, C25B 1/04, C25B 15/08, B01D 61/00, C01B 32/50

(54) **PROCESS FOR PRODUCING CARBON MONOXIDE BY ELECTROLYSIS OF CARBON DIOXIDE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Marras, Elena, 60388 Frankfurt am Main (DE); Cusati, Giuseppe, 60388 Frankfurt am Main (DE); Chaubet, Lucie, 60388 Frankfurt am Main (DE); Barwe, Stefan, 60388 Frankfurt am Main (DE)
(74) Representative: Air Liquide

(57) **Abstract**

A process for producing a carbon monoxide rich product stream by electrolysis of carbon dioxide in an electrolyzer, in which carbon monoxide is separated from a cathode product stream in a first separation device to form a carbon monoxide rich product stream and a first off-gas stream containing carbon monoxide and carbon dioxide, and in which oxygen is separated from an anode product stream in a second separation device to form an oxygen rich product stream and a second off-gas stream containing oxygen and carbon dioxide. The first off-gas stream and the second off-gas stream are supplied to an oxidizing device, in which the oxygen of the second off-gas stream is at least partially reacted with carbon monoxide present in the first off-gas stream to form carbon dioxide, whereby an oxygen depleted stream containing carbon dioxide is formed and recycled to the electrolyzer.

## Description

The invention relates to a process and an arrangement for producing a carbon monoxide containing product by the electrochemical reduction of carbon dioxide in an electrolyzer.

Carbon monoxide (CO) is an important raw material for the chemical industry and can be produced, for example, by steam reforming or dry reforming of hydrocarbonrich feedstock such as natural gas.

Electrolysis of carbon dioxide is a more environmentally friendly alternative to these production processes, as it is independent of the availability of fossil raw materials and can return carbon dioxide produced in chemical production processes or power plants to the carbon cycle instead of emitting it into the atmosphere with the known consequences.

In carbon dioxide electrolysis, carbon monoxide is formed at the cathode by the reduction of carbon dioxide, while oxygen is formed at the anode by the oxidation of an oxygen moiety having oxygen in an oxidation number lower than zero. Accordingly, a carbon dioxide stream is fed to the cathode space of an electrolyzer, whilst a water containing stream is fed to the anode space.

Depending on the process conditions of a carbon dioxide electrolysis and the catalyst used, other valuable products such as hydrogen, methane, ethane and formic acid can be formed on the cathode side in addition or as an alternative to carbon monoxide. In particular, in the case of co-electrolysis with water, a synthesis gas containing carbon monoxide and hydrogen can be formed on the cathode side, whereby the amount of hydrogen formation depends on the extent of the excess carbon dioxide present in the feed streams, the selectivity of the catalyst and the proton availability.

In a co-electrolysis with water at a proton exchange membrane (PEM) based electrolyzer system, the following electrochemical reactions take place:

| | |
|---|---|
| Cathode: | CO₂ + 2 e- + 2 H⁺ → CO + H₂O |
| | 2 e- + 2 H⁺ → H₂ |
| Anode: | 2 H₂O → O₂ + 4 H⁺ + 4 e⁻ |

In a PEM based electrolysis system, protons migrate through an ion-selective membrane from the anode side to the cathode side of an electrolysis cell. On the cathode side, the two half-cell reactions described above compete with regard to the formation of hydrogen and carbon monoxide, whereby a product gas with variable composition can be obtained.

In the case that pure carbon monoxide should be obtained, the aim of the electrolyzer setup and the control of the process conditions is to suppress the formation of hydrogen as much as possible and to promote the formation of carbon monoxide. For that purpose, polymer electrolyte membranes are used, which preferably conduct anions, in particular hydroxide anions, carbonate anions or bicarbonate anions. The electrolysis is then performed in an aqueous alkaline medium, for example low concentrated potassium hydroxide solution, carbonate solution or bicarbonate solution.

In such an alkaline system for performing carbon dioxide electrolysis, for example the following electrochemical reactions take place:

| | |
|---|---|
| Cathode: | CO₂ + 2 e- + H₂O → CO + 2 OH- |
| Anode: | 2 OH- → ½ O₂ + H₂O + 2 e- |

Usually, the conversion of carbon dioxide to carbon monoxide is never complete, which means that the gas mixture produced on the cathode side contains carbon dioxide in addition to carbon monoxide (and optionally hydrogen). Furthermore, it is known from the pertinent literature that carbon dioxide not converted at the cathode dissolves in water in the form of carbonate ions or hydrogen carbonate ions. These anions migrate to the anode side of the respective electrolysis cell and are released there, after oxidation of the carbonate or hydrogen carbonate bound oxygen, in the form of gaseous carbon dioxide together with the oxygen formed as the anode product. In other words, unreacted carbon dioxide is found in the respective product gas mixtures on both the anode and the cathode side.

The carbon monoxide product generated on the cathode side is to be produced in the highest possible purity, either as pure carbon monoxide or as a synthesis gas mixture consisting of carbon monoxide and hydrogen. This means that the carbon dioxide on the cathode side has to be separated from the aforementioned gases. Since this carbon dioxide is not to be emitted into the atmosphere, it should be recycled as a reactant to the feedstock stream of the electrolysis system.

The same applies in principle to the anode side. Although the oxygen produced here is often not further utilized and is released into the atmosphere, this then becomes a problem if this oxygen stream contains significant amounts of carbon dioxide. Thus, on the anode side, too, the carbon dioxide must be separated from the oxygen product stream, and the separated carbon dioxide must then be recycled as a reactant to the feedstock stream of the electrolysis system. Here, a problem is that the separated carbon dioxide will always contain some residual oxygen, depending on the separation method use, which is detrimental to the electrolyzer system as it causes degradation of silver based electrodes thus leading to an overall lower performance.

The object of the present invention is therefore to provide a process for the production of an electrochemically generated gas product which contains at least carbon monoxide as a product gas and optionally hydrogen as a further product gas, which enables the utilization of unreacted carbon dioxide within the process in the most efficient manner possible, thereby minimizes carbon dioxide emissions and electrode degradation.

US 10,494,728 B2 discloses the purification of carbon monoxide at the cathode side of a solid oxide electrolysis cell (SOEC) system by means of a pressure swing adsorption (PSA) system. The PSA off-gas containing a mixture of carbon dioxide and carbon monoxide is recycled back into the electrolysis system. The carbon monoxide present in the recycle stream is required to ensure a reductive atmosphere in the system thus avoiding system degradation. From the recycle stream, a purge stream is separated as a substream to avoid the accumulation of inert gas components within the closed loop system, of which the recycle stream forms a part thereof. As the purge stream contains toxic carbon monoxide, the purge stream is directed to a catalytic or thermal oxidizer which converts any carbon monoxide to carbon dioxide. The separation of carbon dioxide from the anode product stream and its recycle to the carbon dioxide feedstock is not considered.

According to EP 3 885 469 A1, oxygen is removed from a gas mixture containing carbon dioxide and oxygen generated on the anode side by burning this oxygen in a boiler. This produces a pure carbon dioxide stream, which is discharged from the boiler and can be recycled as a reactant stream to the carbon dioxide feedstock stream of the electrolysis system. Such a boiler requires additional material input in the form of a fuel, for example a hydrocarbon fuel such as natural gas to convert the oxygen to carbon dioxide.

A further object of the present invention is thus to at least in part overcome the disadvantages of the prior art.

According to the invention, at least one of the underlying problems is at least partially solved by a process for producing a carbon monoxide containing product by electrolysis of carbon dioxide comprising
(a) Providing a first electrolysis medium comprising a first feedstock stream containing carbon dioxide and a recycle stream containing carbon dioxide, and providing a second electrolysis medium comprising a second feedstock stream containing water;
(b) Converting the first and second electrolysis medium in an electrolyzer, which comprises multiple electrolysis cells, each cell comprising a cathode space for forming a cathode product and an anode space for forming an anode product, wherein
   - in the respective cathode spaces a cathode product stream is formed, which contains carbon monoxide formed by the electrochemical reduction of carbon dioxide of the first electrolysis medium and which contains non-converted carbon dioxide, and
   - in the respective anode spaces an anode product stream is formed, which contains oxygen and non-converted carbon dioxide;
(c) Separating carbon monoxide from the cathode product stream in a first separation device to form a carbon monoxide rich product stream and a first off-gas stream containing carbon monoxide and carbon dioxide;
(d) Separating oxygen from the anode product stream in a second separation device to form an oxygen rich product stream and a second off-gas stream containing oxygen and carbon dioxide;
(e) Supplying the first off-gas stream and the second off-gas stream to an oxidizing device, in which the oxygen of the second off-gas stream is at least partially reacted with carbon monoxide present in the first off-gas stream to form carbon dioxide, whereby an oxygen depleted stream containing carbon dioxide is formed;
(f) Withdrawing said oxygen depleted stream containing carbon dioxide from the oxidizing device to form the recycle stream, and combining said recycle stream with the first feedstock stream to form the first electrolysis medium.

According to the invention, a first off-gas stream is produced in a first separation device and a second off-gas stream is produced in a second separation device. In the first separation device, a carbon monoxide rich stream is produced as the main cathode side product stream. In the second separation device, an oxygen rich stream is produced as the main anode side product stream. The oxygen rich stream may be utilized further or vented to the atmosphere. Due to the migration of carbon dioxide from the cathode spaces to the anode spaces of the electrolyzer, carbon dioxide is contained in the anode side product stream and thus is separated forming part of the off-gas stream of the second separation device along with residual amounts of oxygen not separated by the second separation device. Due to the fact that the conversion of carbon dioxide to carbon monoxide in the cathode spaces of the electrolyzer is not complete, carbon dioxide is contained in the cathode side product stream and thus is separated forming part of the off-gas stream of the first separation device along with residual amounts of carbon monoxide not separated by the first separation device. The first and the second off-gas stream are each supplied to an oxidizing device, for instance an oxidizer. In the oxidizing device, oxygen contained in the second off-gas stream is utilized for the conversion of carbon monoxide contained in the first off-gas stream to carbon dioxide. Thereby, the oxygen content and the carbon monoxide content is reduced by means of the oxidizing device, which results in a recycle stream withdrawn from the oxidizing device which is depleted in oxygen and carbon monoxide, and therefore enriched in carbon dioxide. Due to the lowered oxygen content of said recycle stream, it can be recycled to the inlet section of the electrolyzer without negative impact or at least reduced negative impact on the lifetimes of the electrodes which are used in the electrolyzer. Furthermore, the carbon of the carbon monoxide contained in the first off-gas stream is at least partially converted to carbon dioxide, and thus can be utilized as reactant for the cathode side electrochemical reduction by forming part of the first electrolysis medium. Furthermore, carbon dioxide contained in the first and second off-gas streams which remains unconverted in the oxidizing device may be recycled to the inlet section of the electrolyzer in its entirety. Hence, the all-over process is designed such that carbon present in the process is either converted to form the carbon monoxide product or is re-used as reactant for the electrochemical conversion reactions within the electrolyzer.

The recycle stream is depleted of oxygen compared to the second off-gas stream, in particular with regard to the total quantity of oxygen contained in the second off-gas stream. Furthermore and preferably, the recycle stream is depleted of carbon monoxide compared to the first off-gas stream, in particular with regard to the total quantity of carbon monoxide contained in the first off-gas stream. That is, the concentration of oxygen and preferably carbon monoxide is not only lowered in the recycle stream by means of mixing the first and second off-gas streams, but by means of the chemical reaction of carbon monoxide and oxygen within the oxidizing device.

The first electrolysis medium is formed by the first feedstock stream and the recycle stream. The first electrolysis medium is preferably supplied to the cathode side, which means the cathode spaces of the electrolyzer. The first feedstock stream has preferably a carbon dioxide content of at least 90 Vol.-%, or at least 95 Vol.-%, or at least 98 Vol.-%, or at least 99 Vol.-%. Preferably, the first feedstock stream is a pure carbon dioxide stream. The first feedstock stream may contain residual amounts of water, for example a residual amount of 1 Vol.-% water or less, or 0.5 Vol.-% water or less, or 1000 ppmv water or less. The recycle stream may contain carbon monoxide in case the conversion of carbon monoxide with oxygen in the oxidizing device to form carbon dioxide is not complete. Preferably, the carbon monoxide content of the recycle stream is 10 Vol.-% or less, or 5 Vol.-% or less, or 2 Vol.-% or less, or 1 Vol.-% or less, or 1000 ppmv or less, or 500 ppmv or less, or 100 ppmv or less. The recycle stream may contain oxygen in case the conversion of oxygen with carbon monoxide to form carbon dioxide in the oxidizing device is not complete. Preferably, the oxygen content of the recycle stream is 2 Vol.-% or less, or 1 Vol.-% or less, or 1000 ppmv or less, or 500 ppmv or less, or 100 ppmv or less. Further preferred, the recycle stream is free of carbon monoxide. Also preferred, the recycle stream is free of oxygen. In the context of the invention, "free of" means that the content of the respective component does not exceed an amount of preferably 50 ppmv, or 10 ppmv, or 1 ppmv. Preferably, the conversion of carbon monoxide and oxygen to form carbon dioxide in the oxidizing device is complete. That is to say, preferably, carbon monoxide and oxygen are present in the oxidizing device in a stoichiometric ratio that allows complete conversion of both reactants. This can be achieved, for example, by appropriate control measures of the first and second separation devices.

The second electrolysis medium comprises a second feedstock stream containing water. The second electrolysis medium is preferably supplied to the anode side, which means the anode spaces of the electrolyzer. The second feedstock stream may be an aqueous stream with a pH value of more than 7 which contains at least one electrolyte. For example, the second feedstock stream may be an aqueous solution of a hydroxide, for example potassium hydroxide, an aqueous solution of a carbonate, for example potassium carbonate, or an aqueous solution of a bicarbonate, for example potassium bicarbonate. The electrolyte concentration of the aqueous solution may be 1 molar or less, or 0.1 molar or less. The second feedstock stream also may be a pure water stream having a pH value of 7 or less.

The electrolyzer may contain electrolysis cells which contain polymer electrolyte membranes, which preferably conduct anions, in particular hydroxide anions, carbonate anions or bicarbonate anions. The electrolysis is then preferably performed in an aqueous alkaline medium as described above. As an alternative, but less preferred, the electrolyzer may contain electrolysis cells which contain proton exchange membranes which preferably conduct protons. The electrolysis is then preferably performed in a pure water medium as described above.

The first and second electrolysis medium are electrochemically converted in the electrolyzer by supplying a direct electrical current to the electrolyzer. The electrolyzer comprises multiple electrolytic cells. Preferably, the electrolysis is carried out at an industrial scale, in which case the electrolyzer comprises several stacks of electrolytic cells. Each electrolytic cell has an anode within an anode space and a cathode within a cathode space. The respective anode and cathode spaces are separated by a membrane or diaphragm. The multiplicity of electrolytic cells form a plurality of anode spaces and cathode spaces, in which the respective electrochemical reactions take place. In the respective cathode spaces, carbon dioxide contained in the first electrolysis medium is reduced to form carbon monoxide. As the reduction of carbon dioxide to form carbon monoxide is not complete, the respective cathode product stream contains carbon monoxide and carbon dioxide. In the respective anode spaces, in particular water-bound oxygen deriving from the water containing second feedstock stream having an oxygen number of minus two is oxidized to form molecular oxygen. Due to the migration of carbon dioxide from the respective cathode spaces to the respective anode spaces of the electrolyzer, also carbon dioxide is contained in the anode side product stream along with oxygen.

In the first separation device, carbon monoxide is separated from the cathode product stream to form a carbon monoxide rich product stream and the first off-gas stream which contains carbon dioxide and carbon monoxide, in particular residual amounts of carbon monoxide not separated from the cathode product stream by the first separation device. The carbon monoxide rich product stream may have a carbon monoxide content of at least 90 Vol.-%, or at least 95 Vol.-%, or at least 99 Vol.-%. The carbon monoxide rich product stream may be subject to a further separation step to further enrich the carbon monoxide content in the respective product stream. The first separation device may comprise at least one adsorption based separation unit, for example a pressure swing adsorption unit or a temperature swing adsorption unit, preferably a pressure swing adsorption unit. As an alternative, the first separation device may comprise at least one unit operating at low temperatures, in particular a so-called cryogenic temperature. An example for such a separation unit is a carbon monoxide cold box. However, the type of separation device is not crucial to carry out the present invention. It is only crucial that in the first separation device, a first stream is formed which is the carbon monoxide rich product stream, and a second stream is formed which is the first off-gas stream containing carbon monoxide and carbon dioxide.

In the second separation device, oxygen is separated from the anode product stream to form an oxygen rich product stream and the second off-gas stream which contains carbon dioxide and oxygen, in particular residual amounts of oxygen not separated from the anode product stream by the second separation device. The oxygen rich product stream may have an oxygen content of at least 90 Vol.-%, or at least 95 Vol.-%, or at least 99 Vol.-%. The oxygen rich product stream may be subject to a further separation step to further enrich the oxygen content in the respective product stream, in particular in case the oxygen rich product stream is further utilized. The second separation device may comprise an adsorption based separation unit, for example a pressure swing adsorption unit or a temperature swing adsorption unit, preferably a pressure swing adsorption unit. However, the type of separation unit is not crucial to carry out the present invention. It is only crucial that in the second separation device, a first stream is formed which is the oxygen rich product stream, and a second stream is formed which is the second off-gas stream containing oxygen and carbon dioxide.

Any water contained in the cathode product stream may be removed by means of a dryer to obtain a cathode product stream with an acceptable water content for further processing, in particular before the cathode product stream is supplied to the first separation device. Preferably, the cathode product stream is compressed to a pressure level required by the first separation device. For example, the cathode product stream is compressed to a pressure level which is required for the operation of a downstream arranged pressure swing adsorption unit. Water may be removed preferably from the compressed cathode product stream.

Any water contained in the anode product stream may be removed by means of a dryer to obtain an anode product stream with an acceptable water content for further processing, in particular before the anode product stream is supplied to the second separation device. Preferably, the anode product stream is compressed to a pressure level required by the first separation device. For example, the anode product stream is compressed to a pressure level which is required for the operation of a downstream arranged pressure swing adsorption unit. Water may be removed preferably from the compressed anode product stream. However, it is also possible to remove water from the anode product stream before compression.

Any water contained in the recycle stream withdrawn from the oxidizing device may be removed by means of a dryer to obtain a recycle stream with an acceptable water content for further processing, in particular before the recycle stream is combined with the first feedstock stream to form the first electrolysis medium.

The first feedstock stream and the recycle stream do not have to be necessarily combined upstream of an inlet section of the electrolyzer to form the first electrolysis medium. It is only crucial that both the recycle stream and the first feedstock stream are subject to electrochemical reduction within the cathode spaces of the electrolyzer. Mixing of both streams may also occur at or even downstream of an inlet section of the electrolyzer, for instance within the cathode spaces of the electrolyzer.

According to a preferred embodiment of the process, the cathode product stream contains carbon monoxide, hydrogen and non-converted carbon dioxide, wherein carbon monoxide and hydrogen are separated from the cathode product stream in the first separation device to form the carbon monoxide rich product stream and the first off-gas stream containing carbon monoxide and carbon dioxide. Depending on which electrolyte medium and which type of membrane or diaphragm within the electrolyzer are used for the process, and how other process parameters are designed, the cathode product stream may contain significant amounts of hydrogen. The aim of the process may be to produce a cathode product that is pure carbon monoxide. However, an alternative aim of the process may be to produce a cathode product that is a mixture of carbon monoxide and hydrogen. According to this embodiment, the first separation device separates carbon monoxide and hydrogen from the cathode product stream. The first off-gas stream may contain hydrogen in addition to carbon monoxide and carbon dioxide. The hydrogen contained in the first off-gas stream can be oxidized to water in the oxidizing device by the oxygen contained in the second off-gas stream. The water can then be removed from the recycle stream by means of a dryer, as described above.

According to a further preferred embodiment of the process, carbon monoxide is separated from the carbon monoxide rich product stream in a third separation device to form a further carbon monoxide rich product stream further enriched in carbon monoxide and a third off-gas stream containing carbon monoxide and optionally hydrogen. In order to further increase the carbon monoxide content in the desired carbon monoxide-rich product stream, the carbon monoxide-rich product stream withdrawn from the first separation device can be supplied to a further, here third separation device. This is particularly relevant if the carbon monoxide-rich product stream obtained from the first separation device contains hydrogen, as in the aforementioned embodiment, which should be removed from the desired product stream. In this case, the off-gas stream withdrawn from the third separation device contains said hydrogen along with carbon monoxide.

According to a further preferred embodiment of the process, the third separation device comprises a temperature swing adsorption (TSA) unit and a membrane unit arranged downstream of the TSA unit, wherein an off-gas withdrawn from the TSA unit is recycled as a feed gas to the first separation unit, and the third off-gas stream is withdrawn from the membrane unit. In the TSA unit, the carbon monoxide-rich product stream is further enriched with carbon monoxide. That is, the main stream withdrawn from the upstream first separation device is supplied to the TSA unit and further enriched in carbon monoxide. The also obtained off-gas stream, which contains carbon monoxide and optionally hydrogen and further minor impurities, is recycled as feed to the first separation device for carbon monoxide and optionally hydrogen recovery. To further increase the carbon monoxide concentration in the carbon monoxide rich product stream, the main stream withdrawn from the TSA unit is supplied to a membrane unit, which provides a permeate stream and a retentate stream. The retentate stream contains a carbon monoxide rich product stream, which is further enriched in carbon monoxide in comparison to the main product stream withdrawn from the TSA unit. The permeate stream withdrawn from the membrane unit is referred to as the third off-gas stream withdrawn from the membrane unit. It contains carbon monoxide, optionally hydrogen and further minor impurities.

According to a further preferred embodiment of the process and as an alternative to the aforementioned embodiment, the third separation device comprises a temperature swing adsorption (TSA) unit and a cryogenic unit arranged downstream of the TSA unit, and wherein an off-gas withdrawn from the TSA unit is recycled as a feed gas to the first separation unit, and the third off-gas stream is withdrawn from the cryogenic unit. To further increase the carbon monoxide concentration in the carbon monoxide rich stream, the main stream withdrawn from the TSA unit is supplied to a cryogenic unit, which provides a carbon monoxide stream further enriched in carbon monoxide in comparison to the main stream withdrawn from the first separation device, and the third off-gas stream. An example for a cryogenic unit is a carbon monoxide cold box. The third off-gas stream withdrawn from the cryogenic unit contains carbon monoxide, optionally hydrogen and further minor impurities.

According to a further preferred embodiment of the process, the third off-gas stream is combusted in a flare by means of oxygen contained in the oxygen-rich product stream. Although the third off-gas stream will contain only small residual amounts of carbon monoxide due to the preceding purification steps arranged upstream, said carbon monoxide cannot be released untreated into the atmosphere due to its toxicity, especially in an industrial-scale process. This residual amount of carbon monoxide, optionally together with hydrogen, is advantageously combusted by oxygen contained in the oxygen-rich product stream. For example, a partial stream of the oxygen-rich product stream can be used for this purpose, regardless of whether or not the oxygen-rich product stream is further utilized or vented to the atmosphere.

According to a further preferred embodiment of the process, the cathode product stream is dried before carbon monoxide is separated from it in the first separation device and/or the anode product stream is dried before oxygen is separated from it in the second separation device. The "and" option is preferred. According to a further preferred embodiment of the process, the cathode product stream is compressed before carbon monoxide is separated from it in the first separation device and/or the anode product stream is compressed before oxygen is separated from it in the second separation device. The "and" option is preferred. Preferably, the respective cathode and/or anode product stream is compressed before it is dried, whereby also the "and" option will be preferred.

According to a further preferred embodiment of the process, the oxidizing device is a catalytic oxidizer. A catalytic oxidizer is preferred to a thermal oxidizer because a catalytic oxidizer can provide more favourable process conditions for the over-all process containing an electrolyzer as the main reaction device. By means of a catalyst that lowers the activation energy of the oxidation reaction of carbon monoxide with oxygen to form carbon dioxide, the corresponding reaction can be carried out at lower temperatures and with greater selectivity. This eliminates the need for extensive heating of the respective off-gas streams supplied to the oxidizing device and extensive cooling of the recycle stream withdrawn from the oxidizing device.

According to a further preferred embodiment of the process, the first separation device comprises a pressure swing adsorption (PSA) unit and/or the second separation device comprises a pressure swing adsorption (PSA) unit. The "and" case is preferred. Advantage of utilizing at least one PSA unit in connection with the invention is that the purity of the respective product streams and the composition of the respective off-gas streams can be adjusted by selecting the adsorbent and the usual process parameters such as pressure and cycle time. Furthermore, it is also possible that several PSA units may be connected in series in regards to each separation device in order to increase the purity of the respective product stream and to vary the composition of the respective off-gas streams. In case multiple PSA units connected in series are used, the respective off-gas streams withdrawn from these units can form the "first" or "second" off-gas stream in their entirety or in part.

According to a further preferred embodiment of the process, the first feedstock stream contains at least 90 Vol.-% carbon dioxide, preferably at least 95 Vol.-% carbon dioxide, more preferred at least 99 Vol.-% carbon dioxide.

In the following, the invention will be described with respect to the figures. The figures show preferred embodiments, to which the invention is not limited. The figures and dimensions shown therein are only schematic. The figures show:
- Fig. 1:: a first embodiment of an arrangement for carrying out a process according to the invention,
- Fig. 2:: a second embodiment of an arrangement for carrying out a process according to the invention,
- Fig. 3:: a third embodiment of an arrangement for carrying out a process according to the invention.

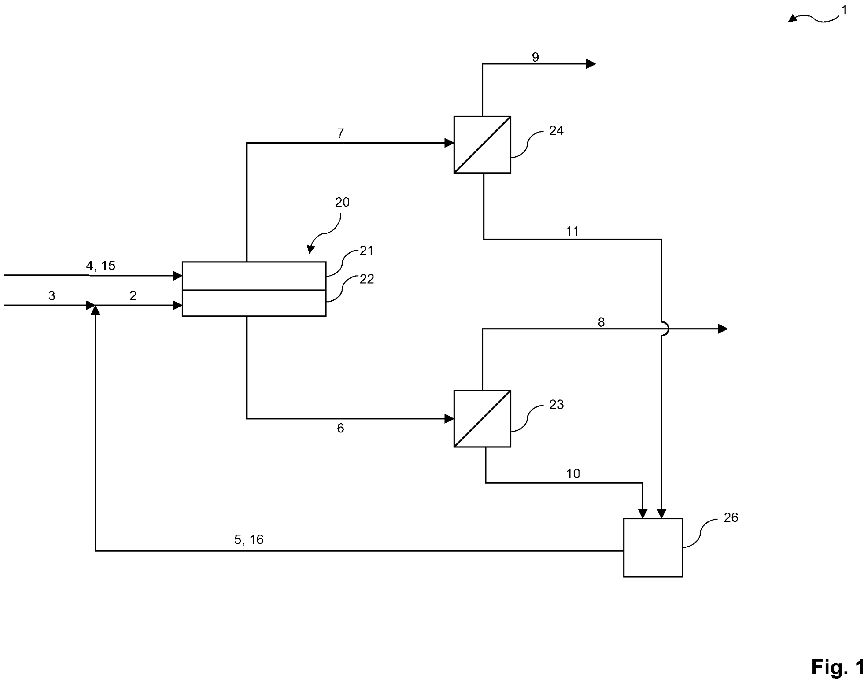

Figure 1 shows a first embodiment of an arrangement 1 for carrying out a process according to the invention. An electrolyzer 20 comprising multiple electrolysis cells forming respective anode spaces 21 and cathode spaces 22 is utilized for the electrolysis of carbon dioxide to produce a carbon monoxide rich product stream 8. A first electrolysis medium 2 containing carbon dioxide as the main component, preferably containing more than 95 % per volume carbon dioxide, is supplied as a stream to the cathode spaces 22 of the electrolyzer 20. The stream of the first electrolysis medium 2 is formed by combining a first feedstock stream 3 and a recycle stream 5. Main component of the first feedstock stream 3 is carbon dioxide, preferably with a content of more than 95 % per volume carbon dioxide within the first feedstock stream 3. Main component of the recycle stream 5 is also carbon dioxide, preferably with a content of more than 98 % per volume carbon dioxide within the recycle stream 5. The recycle stream 5 also contains minor amounts of oxygen and carbon monoxide, preferably less than 500 ppmv carbon monoxide and oxygen each. The second feedstock stream 4 is a 0.1 molar aqueous solution of potassium hydroxide. A second electrolysis medium 15 is formed by said second feedstock stream 4, which is supplied to the anode spaces 21 of the electrolyzer 20 to from oxygen as the main anode product.

The design parameters of the process are chosen such that the formation of hydrogen produced in the cathode spaces 22 of the electrolyzer is suppressed as much as possible, so that a cathode product stream 6 withdrawn from the cathode spaces 22 mainly contains carbon monoxide as the target product and non-converted carbon dioxide. Due to the migration of carbon dioxide from the respective cathode spaces 22 to the respective anodes spaces 21 of the electrolyzer 20, the anode product steam does not only contain oxygen as the main anode side product, but also significant amounts of carbon dioxide.

The cathode product stream withdrawn from the cathode spaces 22 of the electrolyzer 20 is supplied to a first separation device 23, which comprises for example a pressure swing adsorption (PSA) unit. In the first separation device 23, carbon monoxide is separated from the cathode product stream 6, whereby a carbon monoxide rich product stream 8 is formed, which has a carbon monoxide content of at least 98 Vol.-%. Said carbon monoxide rich product stream 8 is withdrawn from the process for further processing, for example in a process arranged downstream of the process 1 (not shown). From the first separation device 23 also a first off-gas stream 10 is withdrawn which comprises carbon monoxide not separated from the cathode product stream 6 and non-converted carbon dioxide.

The anode product stream withdrawn from the anode spaces 21 of the electrolyzer 20 is supplied to a second separation device 24, which comprises for example a pressure swing adsorption (PSA) unit. In the second separation device 24, oxygen is separated from the anode product stream 7, whereby an oxygen rich product stream 9 is formed, which has an oxygen content of at least 98 Vol.-%. Said oxygen rich product stream 9 is withdrawn from the process for further processing, for example in a process arranged downstream of the process 1 (not shown). Alternatively, the oxygen rich product stream 9 is vented to the atmosphere. From the second separation device 24 also a second off-gas stream 11 is withdrawn which comprises oxygen not separated from the anode product stream 7 and non-converted carbon dioxide.

The first off-gas stream 10 and the second off-gas stream 11 are supplied to an oxidizing device 26, for instance a catalytic oxidizer. In the oxidizing device 26, the oxygen contained in the second off-gas stream 11 is at least partially reacted with carbon monoxide present in the first off-gas stream 10. That is, in the oxidizing device 26, the first off-gas stream 10 and the second off-gas stream 11 are mixed such that a reaction between carbon monoxide and oxygen to form carbon dioxide takes place. Thereby, an oxygen depleted stream 16 is formed, which is withdrawn from the oxidizing device 26 to form the recycle stream 5. The recycle stream 5 is also depleted in carbon monoxide due to the reaction of carbon monoxide with oxygen to form carbon dioxide within the oxidizing device 26. Thereby, the total amounts of oxygen and carbon monoxide in the first and second off-gas streams 10, 11 are reduced by forming carbon dioxide in the oxidizing device 26. In a preferred embodiment, carbon monoxide of the first off-gas stream 10 and oxygen of the second off-gas stream 11 are present in a stoichiometric ratio in the oxidizing device 26, so that the resulting recycle stream 5 is free of oxygen and carbon monoxide.

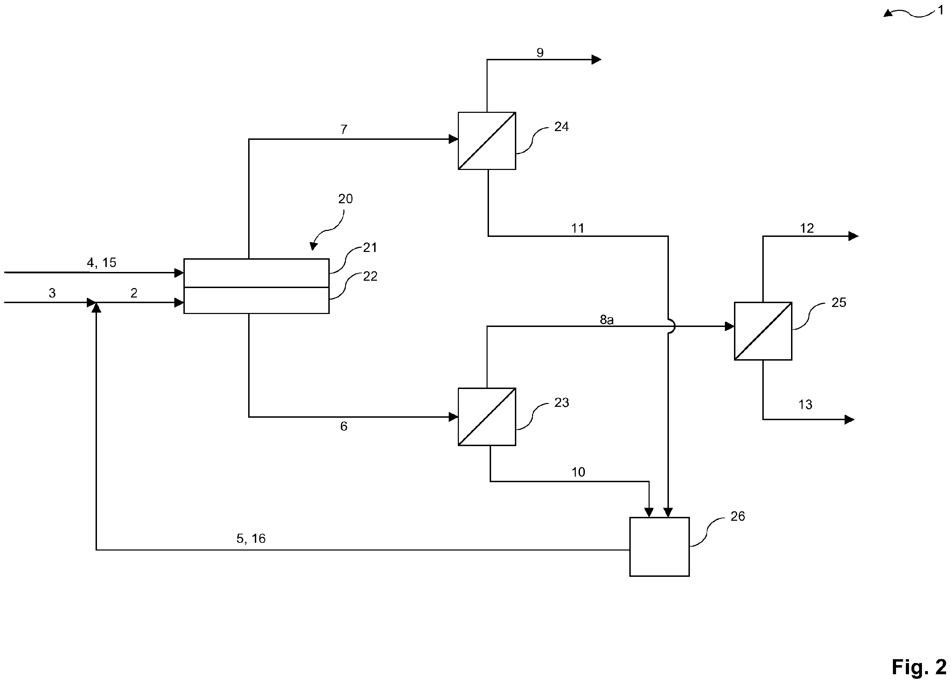

Figure 2 shows a second embodiment of an arrangement 1 for carrying out a process according to the invention. In the following description, only differences compared to the configuration of the process according to Figure 1 are described. The electrolyzer 20 and the process parameters according to the embodiment of Figure 2 are configured such that the cathode product stream contains significant amounts of hydrogen in addition to carbon monoxide as the main component of stream 6. That is, in the first separation device 23, for example a pressure swing adsorption unit, a carbon monoxide rich product stream comprising hydrogen is separated as stream 8a. At the same time, a first off-gas stream 10 containing carbon monoxide and carbon dioxide is withdrawn from the first separation device and routed to the oxidizing device 26, for example a catalytic oxidizer, and is treated in said oxidizing device in the same manner as described for the embodiment of Figure 1.

The carbon monoxide rich product stream 8a, which also contains hydrogen, is routed to a third separation device 25, in which stream 8a is separated into a carbon monoxide rich product stream 12 and a third off-gas stream 13, which contains carbon monoxide and hydrogen.

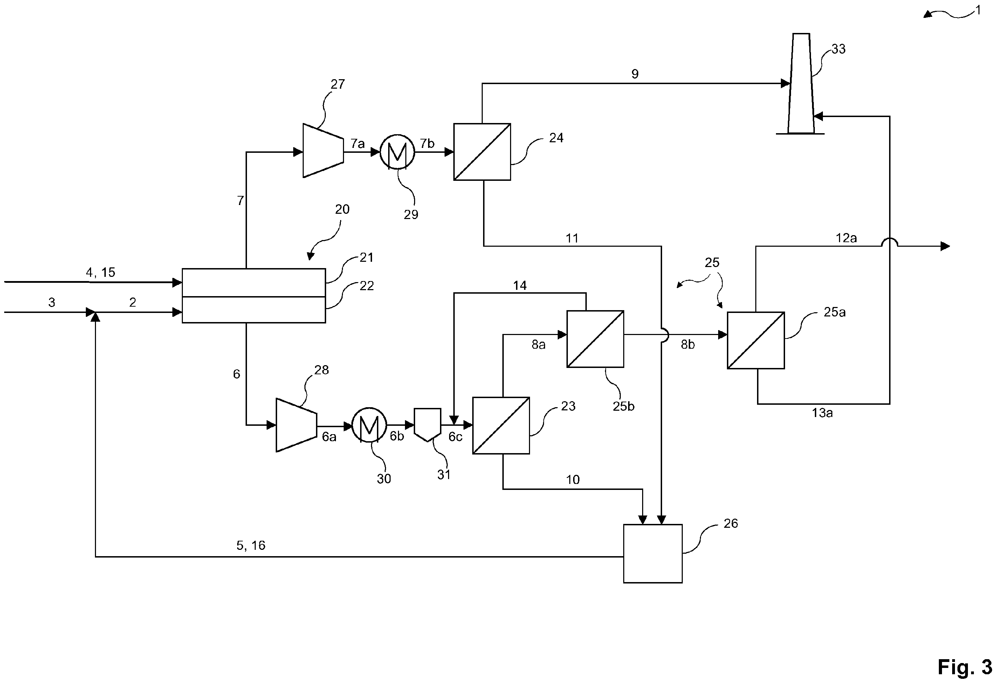

Figure 3 shows the embodiment of the process configuration of Figure 2 more detailed. The cathode product stream 6 is compressed in a compressor 28 to a pressure which is required by the first separation device 23, for example in case the second separation device 23 comprises a pressure swing adsorption unit. The compressed stream 6a is cooled in a heat exchanger 30, supplied to a dryer 31, which is a separator, and afterwards supplied as stream 6c to the first separation device 23.

The anode product stream 7 is compressed in a compressor 27 to a pressure which is required by the second separation device 24, for example in case the second separation device 24 contains a pressure swing adsorption unit. The compressed stream 7a is cooled in a heat exchanger 29, dried (not shown) and afterwards supplied to the second separation device 24 as stream 7b.

From the first separation device 23, a carbon monoxide and carbon dioxide containing off-gas stream 10 is withdrawn, which is supplied to an oxidizing device 26, for example a catalytic oxidizer, where it is treated in the same way as described for the embodiment of Figure 1.

The carbon monoxide rich product stream 8a, which comprises hydrogen, is supplied to a temperature swing adsorption unit 25b, which forms part of the third separation device 25. In the temperature swing adsorption unit, the stream 8a is enriched in carbon monoxide and depleted in hydrogen, which results in a carbon monoxide rich product stream 8b, which has a higher carbon monoxide concentration than stream 8a. An off-gas stream 14 is withdrawn from the temperature swing adsorption unit 25b, which contains carbon monoxide and hydrogen. This stream is recycled to the inlet of the first separation device 23 for carbon monoxide recovery. Stream 8b is supplied to a membrane unit 25a, which also forms part of the third separation device 25. In the membrane unit 25a, the carbon monoxide concentration of the cathode product stream is further increased due to the selectivity of the membrane unit 25a for hydrogen. Hydrogen is passing the (pores of the) membranes of the membrane unit 25a forming a permeate stream 13a, whereas carbon monoxide is not passing the membranes and thus forms a retentate stream 12a. The retentate stream 12a is a pure carbon monoxide stream, whereas the permeate stream 13a is a hydrogen stream which may contain residual amounts of carbon monoxide. To avoid that this carbon monoxide is released to the atmosphere, the permeate stream 13a is routed to a flare 33, where it is combusted by means of oxygen contained in the oxygen rich product stream 9.

### List of reference signs

- 1: process / arrangement
- 2: first electrolysis medium
- 3: first feedstock stream (carbon dioxide)
- 4: second feedstock stream (water)
- 5: recycle stream
- 6: cathode product stream
- 6a: compressed cathode product stream
- 6b: compressed and cooled cathode product stream
- 6c: compressed, cooled and dried cathode product stream
- 7: anode product stream
- 7a: compressed anode product stream
- 7b: cooled and compressed anode product stream
- 8: carbon monoxide rich product stream
- 8a, 8b: carbon monoxide rich product stream comprising hydrogen
- 9: oxygen rich product stream
- 10: first off-gas stream
- 11: second off-gas stream
- 12: carbon monoxide rich product stream
- 12a: membrane unit retentate stream
- 13: third off-gas stream
- 13a: membrane unit permeate stream
- 14: TSA unit off-gas stream
- 15: second electrolysis medium
- 16: oxygen depleted stream
- 20: electrolyzer
- 21: anode spaces
- 22: cathode spaces
- 23: first separation device
- 24: second separation device
- 25: third separation device
- 25a: membrane unit
- 25b: temperature swing adsorption unit
- 26: oxidizing device
- 27,28: compressor
- 29, 30: heat exchanger (cooler)
- 31: dryer (separator)
- 33: flare

## Claims

1. A process (1) for producing a carbon monoxide containing product by electrolysis of carbon dioxide comprising
(a) Providing a first electrolysis medium (2) comprising a first feedstock stream (3) containing carbon dioxide and a recycle stream (5) containing carbon dioxide, and providing a second electrolysis medium (15) comprising a second feedstock stream (4) containing water;
(b) Converting the first and second electrolysis medium in an electrolyzer (20), which comprises multiple electrolysis cells, each cell comprising a cathode space for forming a cathode product and an anode space for forming an anode product, wherein
- in the respective cathode spaces (22) a cathode product stream (6) is formed, which contains carbon monoxide formed by the electrochemical reduction of carbon dioxide of the first electrolysis medium (2) and which contains non-converted carbon dioxide, and
- in the respective anode spaces (21) an anode product stream is formed, which contains oxygen and non-converted carbon dioxide;
(c) Separating carbon monoxide from the cathode product stream (6) in a first separation device (23) to form a carbon monoxide rich product stream (8) and a first off-gas stream (10) containing carbon monoxide and carbon dioxide;
(d) Separating oxygen from the anode product stream (7) in a second separation device (24) to form an oxygen rich product stream (9) and a second off-gas stream (11) containing oxygen and carbon dioxide;
(e) Supplying the first off-gas stream and the second off-gas stream to an oxidizing device (26), in which the oxygen of the second off-gas stream is at least partially reacted with carbon monoxide present in the first off-gas stream to form carbon dioxide, whereby an oxygen depleted stream (16) containing carbon dioxide is formed;
(f) Withdrawing said oxygen depleted stream containing carbon dioxide from the oxidizing device to form the recycle stream (5), and combining said recycle stream with the first feedstock stream to form the first electrolysis medium.

2. The process according to claim 1, wherein the cathode product stream (6) contains carbon monoxide, hydrogen and non-converted carbon dioxide, and wherein carbon monoxide and hydrogen are separated from the cathode product stream (6) in the first separation device (23) to form the carbon monoxide rich product stream (8, 8a) and the first off-gas stream (10) containing carbon monoxide and carbon dioxide.

3. The process according to claim 1 or 2, wherein carbon monoxide is separated from the carbon monoxide rich product stream in a third separation device (25) to form a further carbon monoxide rich product stream (12) further enriched in carbon monoxide and a third off-gas stream (13) containing carbon monoxide and optionally hydrogen.

4. The process according to claim 3, wherein the third separation device (25) comprises a temperature swing adsorption (TSA) unit (25b) and a membrane unit (25a) arranged downstream of the TSA unit (25b), wherein an off-gas withdrawn from the TSA unit is recycled as a feed gas (14) to the first separation unit (23), and the third off-gas stream (13a) is withdrawn from the membrane unit (25a).

5. The process according to claim 3, wherein the third separation device (25) comprises a temperature swing adsorption (TSA) unit and a cryogenic unit arranged downstream of the TSA unit, and wherein an off-gas withdrawn from the TSA unit is recycled as a feed gas to the first separation unit, and the third off-gas stream is withdrawn from the cryogenic unit.

6. The process according to any one of claims 3 to 5, wherein the third off-gas stream (13, 13a) is combusted in a flare (33) by means of oxygen contained in the oxygen-rich product stream (7).

7. The process according to any of the preceding claims, wherein the cathode product stream (6) is dried before carbon monoxide is separated from it in the first separation device (23) and/or the anode product stream (7) is dried before oxygen is separated from it in the second separation device (24).

8. The process according to any of the preceding claims, wherein the oxidizing device (26) is a catalytic oxidizer.

9. The process according to any of the preceding claims, wherein the first separation device (23) comprises a pressure swing adsorption (PSA) unit and/or the second separation device (24) comprises a pressure swing adsorption (PSA) unit.

10. The process according to any of the preceding claims, wherein the first feedstock stream (3) contains at least 90 Vol.-% carbon dioxide, preferably at least 95 Vol.-% carbon dioxide, more preferred at least 99 Vol.-% carbon dioxide.
